# EUROPEAN PATENT SPECIFICATION

(11) **EP 2 062 815 B1**
(45) Date of publication and mention of the grant of the patent: **17.03.2010**
(21) Application number: 07022692.3
(22) Date of filing: 22.11.2007
(51) Int. Cl.: B64C 1/20

(54) **Airplane seat track**
Flugzeugsitzführung
Glissière de sièges d'avion

(43) Date of publication of application: 27.05.2009
(73) Proprietor: Bishop GmbH Aeronautical Engineers, 22587 Hamburg (DE)
(72) Inventor: Bishop, Peter, 22587 Hamburg (DE)
(74) Representative: UEXKÜLL & STOLBERG

(56) References cited:
- GB-A- 2 406 877
- US-A- 4 771 969
- US-A- 5 871 318

## Description

The present invention relates to an airplane seat track for releasable securing fittings of the legs of airplane seats to the floor of an airplane cabin which is equipped with a standard seat track which comprises an elongated, rectilinear track body having a hollow, longitudinal slide track provided with a series of equidistant circular receptacle sections with circular upper openings, which circular receptacle sections alternate with intermediate lip sections of smaller transverse dimensions than the circular receptacle sections.

The standard seat tracks which are currently mounted in all commercial airplanes are for example described in U.S. Patents No. 5871318, 4,771,969, 4,796,837 and 5,083,726. The seat track comprises an elongated, rectilinear track body having a hollow, longitudinal slide track. In this slide track fittings may be received and secured at a desired position, which fittings in turn are mounted to the legs of airplane seats. The hollow slide track includes a series of equidistant circular receptacle sections with circular upper openings, which circular receptacle sections alternate with intermediate lip sections of smaller transverse dimensions than the circular receptacle sections. The fittings of the seat legs comprise a body with a base from which tabs are extending. In typical cases there is a pair of opposite tabs at a forward portion of the fitting body and a pair of opposite tabs at a rearward portion thereof; such fittings are sometimes also referred to as double studs. The fittings may be inserted into the slide track with each tab pair being in registration with respective receptacle sections and then be slit such that the tabs are underneath lip sections. There are means on the seat leg fittings to secure the fittings in the slide track against longitudinal movement, for example a retainer element that is pivotally mounted on the front face of the fitting body and which has a shape that fits to the shape of the receptacle sections openings such that the retainer element may be pivoted into a receptacle opening in front of the fitting to thereby lock the fitting against longitudinal movement in the slide track. Furthermore, there may be clamping or wedging means, for example actuated by a screw which permit to pull the tabs against the lower surfaces of the lip sections to thereby clamp the fitting in the slide track.

The standard seat tracks mounted in all current airplanes are arranged such that the distance between adjacent receptacle sections is 1 inch (25,4 mm), i.e. the centre points of adjacent circular receptacle sections are spaced apart by 1 inch (25,4 mm). On the other hand, the diameter of the circular receptacle sections is about 20 mm. As a result, there is a distance.between adjacent circular receptacle sections in which the lip sections define a slot opening with edges extending parallel to the longitudinal direction of the seat track. In this standard seat track the position of a seat may be adjusted in incremental steps which are determined by the longitudinal distance of adjacent receptacle sections, i.e. in steps of 1 inch (25,4 mm).

It is an object of the present invention to allow to adapt the design of current standard airplane seat tracks to enable a more efficient positioning of the seat rows in an airplane, without the need to remove the mounted standard airplane seat tracks.

This object is achieved by a seat track comprising the features of claim 1.

According to the invention there is provided an adaptive seat track securable to the standard seat track of existing airplanes. The adaptive seat track comprises a lower mounting portion and an upper secondary seat track portion. The lower mounting portion is adapted to be inserted into the slide track of the standard seat track, and has a plurality of tabs positioned along its length. The tabs are dimensioned such that they are insertable into respective ones of the circular upper openings of the standard seat track, and such that they, when advanced and positioned under respective lip sections, lock the mounting portion in vertical direction in the standard seat track. Thereby the adaptive seat track is fixed within the standard airplane seat track against movements in vertical direction.

The adaptive seat track further has an upper secondary seat track portion having a secondary hollow longitudinal slide track provided with a series of equidistant recesses for receiving latches provided on the seat leg fittings for locking the seat leg fittings against movements in longitudinal direction, the distance between adjacent recesses in the secondary seat track portion being smaller than the distance between adjacent receptacle sections of the standard seat track.

Furthermore, at least one stud is provided, each having an at least partially cylindrical portion adapted to be received by and secured in a receptacle section of the standard seat track while an upper portion of the stud is adapted to be in engagement with the adaptive seat track to lock it against longitudinal movement with respect to the standard seat track.

By means of the invention it is possible to modify the standard seat tracks of existing airplanes in a simple and effective manner, without the need to remove the mounted original standard seat tracks, in such a manner that seat tracks with smaller distances between adjacent receptacle sections are realised which in turn makes it possible to adjust the position of each seat along the seat track with correspondingly finer adjustment steps (which are determined by of the distance between the centre points of adjacent receptacle sections). For example, the adaptive secondary seat track may allow to adjust the positioning of the airplane seats in steps of 10 mm (in case the distance between adjacent recesses in the secondary seat track is 10 mm). Compared to the standard seat track where extensive lip sections were present between adjacent two receptacle sections, a much better positioning can be achieved, or in other words the relative positioning of the seats longitudinally behind each other may be fine-tuned much better so that along the whole length of the airplane it may be possible to fine- tune the positioning of the seats behind each other so that one further row may be fitted in.

In a preferred embodiment the recesses of the upper secondary seat track portion are formed by circular receptacle sections with circular upper openings, said receptacle sections alternating with intermediate lip sections of smaller transverse dimensions than the circular receptacle sections for retaining tabs of the fittings of the seat legs, wherein the longitudinal distance (a) of the centre points of adjacent circular receptacle sections is smaller than or equal to the diameter of the circular receptacle sections. In this manner the receptacle sections effective for the positioning accuracy of the seats are closer together than in the standard seat track to which this adaptive seat track can be retro-fitted in existing airplanes.

In a preferred embodiment, the longitudinal distance between the centre points of adjacent circular receptacle sections in the adaptive seat track is between 8 and 12 mm, in a particularly preferred embodiment about 10 mm. In a further preferred embodiment the distance between adjacent centre points of receptacle sections is about 10 mm, and the diameter of the receptacle sections is about 11 mm.

A further advantage of the afore-mentioned embodiment is that due to the smaller dimensions of the receptacle sections of the adaptive seat track and the complementary parts of the seat leg fittings it is possible to achieve a closer fit and thus less play between seat leg fitting and seat track. This helps to reduce vibration of the seats on the tracks during flight manoeuvres, and thus improves passenger comfort and reduces noise generation. The fittings of the seat legs have a complemetary shape and size so that they may be tightly fitted into the receptacles to thereby minimise any vibrational movement of the seat leg fittings with respect to the seat track.

In another preferred embodiment the adaptive seat track comprises two longitudinal slide tracks, arranged in parallel and spaced apart with respect to each other and from the longitudinal centre line of the adaptive seat track, wherein each of the slide tracks is adapted for receiving one of two sliders connected to a seat track fitting. In this case the recesses of the of the secondary slide tracks may be provided as a series of cut-outs, wherein the series of cut-outs is provided for each of the slide tracks on the side facing away from the other seat track.

The adaptive seat track can also be used to retrofit existing airplanes to provide it with adaptive seat adjustment system which allow to automatically adjust the longitudinal seat positioning in the cabin based on the actual demands for the next flight, e.g. to adapt the number of business class rows to the actual demand or to reduce/increase the seat distances in other areas of the airplane as desired; such adaptive seat arragngement system is described in EP 1 480 874 B1 of the applicant. Of course the adaptive seat track may also be used to retrofit current airplanes to allow better manual positioning of the seat rows.

The main advantages of the airplane seat track of the present invention may be summarised as follows:
1) Old damaged seat tracks (galleys, lavatory areas...) can be retrofitted by covering them with the adaptive seat tracks. No need for high maintenance costs.
2) The adaptive seat track may be the basic mechanical component for the overall adaptive seat arrangement system with adaptive longitudinal positioning of the seats in the cabin as described above. With such automatic system, the airline can easily target its needs regarding the passenger and market demands in a flexible and comfortable way: light / manual reconfiguration, the passenger can order the seat / legroom he/she needs.
3) The adaptive seat track may have 1cm seat positioning accuracy, and thus a finer seat pitch adjustment compared to the 1 inch standard seat rail in current airplanes.
4) With the adaptive seat track, both manual (light reconfiguration) and automatic (full cabin reconfiguration) seat pitch adjustment are possible.
5) Additional to the basic functionality of the adaptive plate, 3 surface finishes products are provided: anodised blue colour plate, glance-polish plate and chrome/nickel-plate.
6) The adaptive plate can be easily mounted / removed from the standard rail.

The invention will be further described in connection with a preferred embodiment with reference to the accompanying drawings in which:
Figure 1 shows an exploded perspective view of an airplane seat track composed of a standard seat track and an adaptive seat track;
Figure 2 shows a perspective bottom view of the adaptive seat track of Figure 1; and
Figure 3 shows a plan top view of an alternative embodiment of an adaptive seat track.

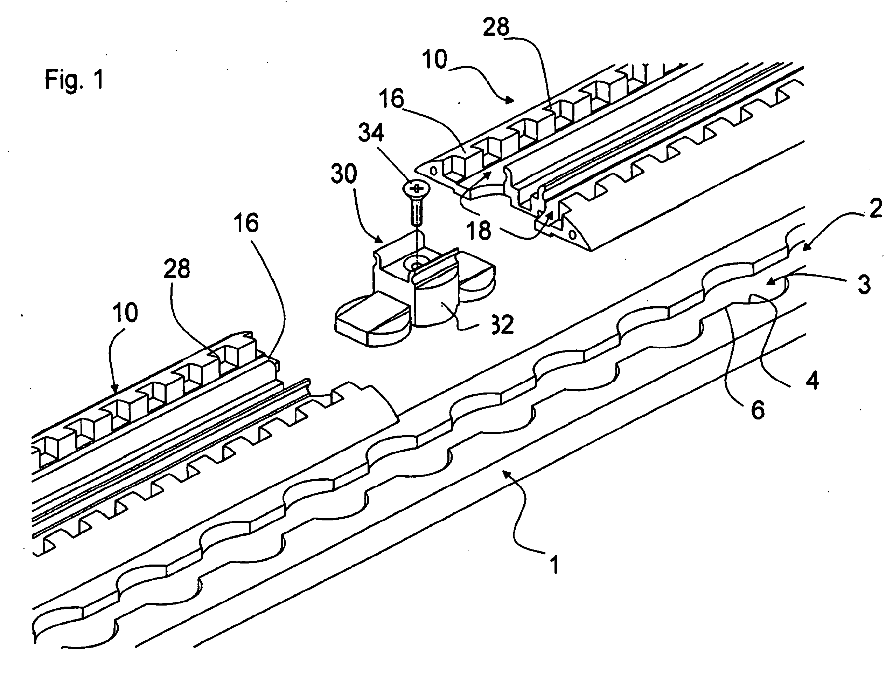

Figure 1 shows in the bottom part the standard airplane seat track 1. This standard seat track comprises an elongated, rectilinear track body having a hollow, longitudinal slide track 2, wherein hollow is intended to mean that the slide track 2 is partially closed at the top. The standard seat track further includes a series of equidistant circular receptacle sections 3, which circular receptacle sections 3 alternate with intermediate lip sections 6 of smaller transverse dimensions then the circular receptacle sections 3. In current airplanes fittings of the seat legs comprise a body with a base from which tabs are extending laterally. The fittings may be inserted into the standard seat track with each pair of opposite tabs being in registration with the respective receptacle section and then be advanced such that the tabs are underneath lip sections 6. In the standard seat track the distance between adjacent receptacle sections 3, i.e. the distance between the centre points of the circular openings 4, is by standard one inch.

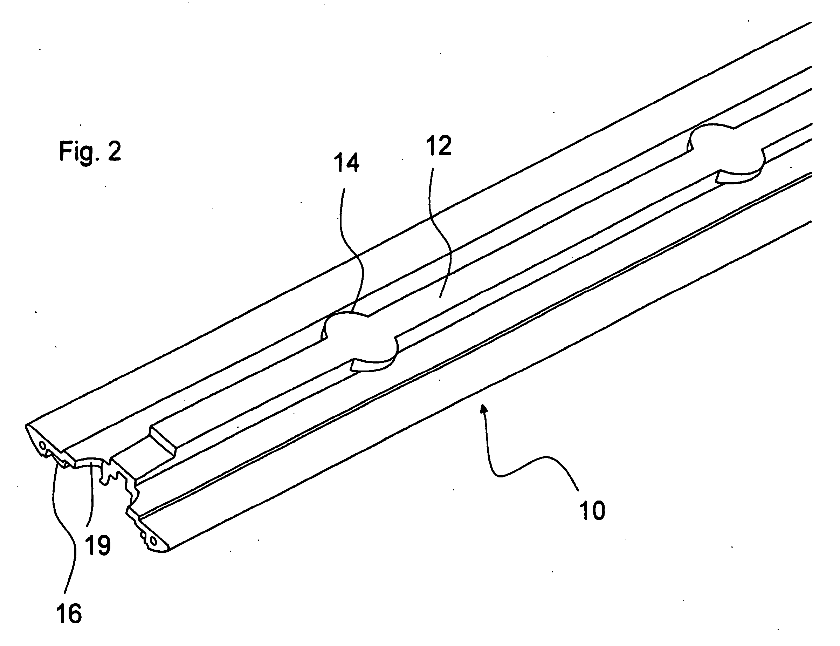

With reference to Figures 1 and 2 an adaptive seat track 10 according to the invention is provided which comprises a lower mounting portion 12 and an upper secondary seat track portion 16. The lower mounting portion 12 has the form of an elongated bar having a width slightly less than the width of the slot between the lip sections 6. On the lower mounting portion a plurality of tabs 14 is provided which project laterally from the side walls on the base of the lower mounting portion 12. The tabs 14 are preferably arranged as pairs on opposite sides of the lower mounting portion 12. Along the length of the lower mounting portion 12 at least one further pair of tabs 14 is provided, wherein the longitudinal distance between the tabs 14 corresponds to a multitude of the distance between adjacent receptacle sections 3 of the standard seat track 1. With this arrangement the lower mounting portion may be partially received within the hollow slide track 2 with the tabs being received by respective receptacle sections 3. After insertion of the tabs into receptacle sections 3 the adaptive seat track is advanced such that the tabs arrive at a position underneath lip sections 6, wherein the tabs in this position lock the lower mounting portion 12 against movement in vertical direction with respect to the standard seat track 1.

In order to lock the adaptive seat track 10 against longitudinal movement with respect to the standard seat track 1 so called studs 30 are provided. This stud 30 has an at least partially cylindrical portion 32 of complementary shape to the circular upper openings 4 of the standard seat track. This stud may be inserted with its cylindrical portion into the circular openings 4 of the standard seat track 1 and may be secured therein by tightening a screw 34.

The end of portion of each adaptive seat track 10 is provided with a recess 19 of complementary shape to the stud 30 so that the stud 30 may engage the adaptive seat track to lock it against longitudinal movements towards the stud, to thereby lock the adaptive seat track 10 against longitudinal movement with respect to the standard seat track 1. Of course, another stud 30 is provided at the other end portion of the adaptive seat track element.

The adaptive seat track 10 further comprises an upper secondary seat track portion 16 having a secondary hollow longitudinal slide track; in this embodiment two parallel longitudinal slide tracks 18 are arranged on the upper secondary seat track portion. The upper surface of each stud 30 is provided with portions which complement the hollow slide track 18 in the region of the recess 19. Thus, when inserted into the corresponding circular opening 4, the stud 30 is completing or extending the hollow slide track 18 in the recess areas at the end portions of adjacent adaptive seat tracks elements. Each of the longitudinal slide tracks 18 is provided with a series of equidistant recesses 28 for receiving complementary shaped latches provided on the seat leg fittings (not shown). In this embodiment the seat leg fittings have to include at least two sliders having a complementary cross-sectional shape to the cross-section of the longitudinal slide tracks 18. Once the sliders are inserted into the hollow longitudinal slide tracks 18 and the seat is at the desired position latches provided on the fitting are brought into engagement with respective recesses 28 in order to lock the leg fitting against movements in longitudinal direction. Since the distance between adjacent recesses 28 is smaller than the distance between adjacent receptacle sections 3 the adaptive seat track 10 allows for a much finer incremental positioning accuracy of the airplane seats on the airplane seat track, while the adaptive seat track 10 is fixed by securing it to the standard seat track present in or existing airplanes. Thus, the existing airplanes may be retro-fitted to provide means for a finer positioning accuracy of the airplane seats without need to remove the standard seat tracks present.

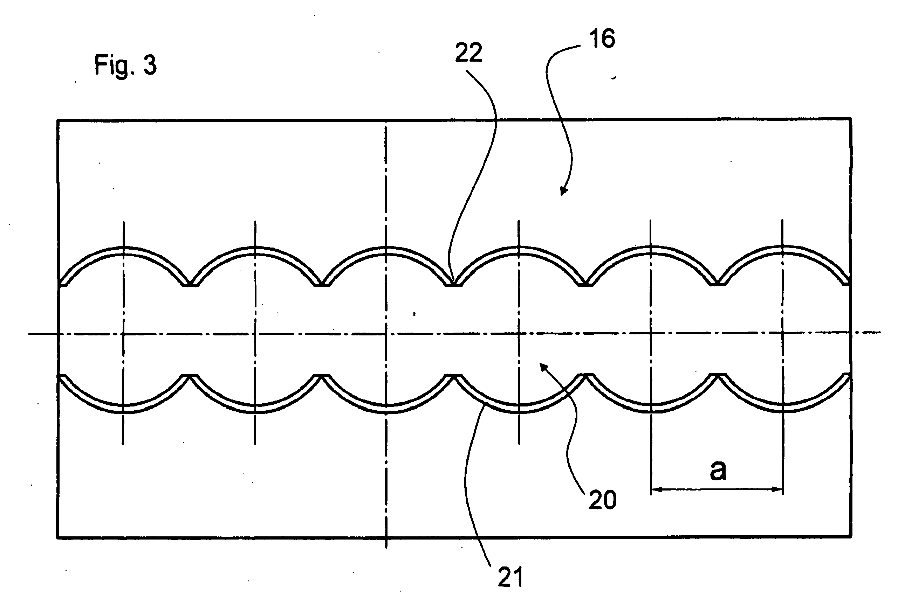

Figure 3 shows a plan top view of an alternative embodiment of an adaptive seat track. The lower mounting portion (not visible in this view) could be the same as in the embodiment of Figures 1 and 2. In this case the upper secondary seat track portion 16 comprises as recesses 20 a series of circular receptacle sections, each receptacle section having a circular opening 21 to the top surface of the seat track body. A fitting of a seat leg (not shown) is provided with one or more pairs of opposite side tabs to allow to insert the fitting into the slide track 16 when the tabs 14 are in registration with corresponding receptacle section openings 21. Once the fitting is thus inserted into the slide track it may be slit in longitudinal direction so that each of the tabs reaches an intermediate area between adjacent receptacle sections. In this position a securing element also connected to the seat leg fitting may be brought into engagement with one or more receptacle sections 20 so that the arrangement is secured against longitudinal movement.

In this version of the adaptive seat track 10 the distance a (see Fig. 3) between adjacent centre points of receptacle sections 20 is such that it is smaller than the diameter of the receptacle sections 3 in the standard seat track as shown in Figure 1. In this arrangement of the upper secondary seat track portion 16 there are no straight edge lip sections between adjacent receptacle sections 20. Instead the lip sections 22 are reduced to constriction areas between adjacent or merging circular receptacle sections 20.

In a preferred embodiment the distance a between adjacent centre points of circular receptacle sections is 10 mm. In this arrangement the position of each seat along the seat track may be adjusted with incremental steps of 10 mm. Compared to the prior art in which this distance was fixed to 1 inch (25,4 mm) this allows a better fine-tuning of the positioning of subsequent seat rows in the airplane cabin. In big passenger airplanes having a large number of subsequent seat rows this may allow a better fine-tuning of the relative position of the subsequent seat rows. As a consequence this may allow to fit in one more seat row if a distance of for example about 1 cm is saved per seat row.

## Claims

1. Airplane seat track for releasable securing fittings of the legs of airplane seats to the floor of the airplane cabin which is equipped with a standard seat track (1) which comprises an elongated, rectilinear track body having a hollow, longitudinal slide track (2) provided with a series of equidistant circular receptacle sections (3) with circular upper openings (4), which circular receptacle sections alternate with intermediate lip sections (6) of smaller transverse dimensions than the circular receptacle sections, wherein the airplane seat track is an adaptive seat track (10) securable to the standard seat track, comprising at least one stud (30), each having an at least partially cylindrical portion (32) adapted to be received by and secured in a receptacle section (3) of the standard seat (1) track while an upper portion (34) of the stud is adapted to be in engagement with the adaptive seat track (10) to lock it against longitudinal movement with respect to the standard seat track (1), **characterized by**: the adaptive seat track (10) comprising
a lower mounting portion (12) which is adapted to be received in the slide track (2) of the standard seat track (1) and which has a plurality of tabs (14) positioned along its length and dimensioned such that they are insertable into respective ones of the circular upper openings (4) of the standard seat track and such that they, when positioned under respective lip sections (6), lock the mounting portion in vertical direction in the standard seat track (1),
an upper secondary seat track portion (16) having a secondary hollow longitudinal slide track (18) provided with a series of equidistant recesses (20; 28) for receiving latches provided on the seat leg fittings for locking the seat leg fittings against movements in longitudinal direction, the distance between adjacent recesses (20; 28) in the secondary seat track portion (16) being smaller than the distance between adjacent receptacle sections (3) of the standard seat track (1).

2. Airplane seat track according to claim 1, wherein the recesses (20; 28) of the upper secondary seat track portion (16) are formed by circular receptacle sections (20) with circular upper openings (21), said receptacle sections (20) alternating with intermediate lip sections (22) of smaller transverse dimensions than the circular receptacle sections (20) for retaining tabs of the fittings of the seat legs, wherein the longitudinal distance (a) of the centre points of adjacent circular receptacle sections (20) is smaller than or equal to the diameter of the circular receptacle sections (3).

3. Airplane seat track according to claim 2, **characterised in that** the longitudinal distance (a) of the centre points of adjacent circular receptacle sections (20) of the upper secondary seat track portion (16) is in the range between 8 to 12 mm.

4. Airplane seat track according to claim 3, **characterised in that** the longitudinal distance of the centre points of adjacent circular receptacle sections (20) of the upper secondary seat track portion (16) is about 10 mm.

5. Airplane seat track according to claim 4, **characterised in that** the diameter of the circular receptacle sections (20) of the upper secondary seat track portion (16) is about 11 mm.

6. Airplane seat track according to any preceding claim, **characterised in that** the recesses of the upper secondary seat track portion (16) are formed by a series of equidistant cut-outs formed adjacent the slide track (8) for receiving ledges of airplane seat fittings.

7. Airplane seat track according to any preceding claim, **characterised in that** the adaptive seat track (10) comprises two longitudinal slide tracks, arranged in parallel and spaced apart with respect to each other, wherein each of the slide tracks is adapted for receiving one of two sliders connected to a seat track fitting.

8. Airplane seat track according to claims 6 and 7, **characterised in that** a series of cut-outs (28) is provided for each of the slide tracks (18) on the side facing away from the other seat track.

## Patentansprüche

1. Flugzeugsitzschiene zum lösbaren Befestigen von Ansätzen der Beine von Flugzeugsitzen am Boden der Flugzeugkabine, die mit einer Standardsitzschiene (1) versehen ist, die einen länglichen, geradlinigen Schienenkörper mit einer hohlen, in Längsrichtung verlaufenden Gleitschiene (2) aufweist, wobei die Gleitschiene mit einer Reihe von äquidistanten kreisförmigen Aufnahmeabschnitten (3) mit kreisförmigen oberen Öffnungen (4) versehen ist, wobei sich die kreisförmigen Aufnahmeabschnitte mit dazwischen liegenden Lippenabschnitten (6) mit kleinerer Querausdehnung als die kreisförmigen Aufnahmeabschnitte abwechseln, wobei die Flugzeugsitzschiene eine Anpassungssitzschiene (10) ist, die an der Standardsitzschiene befestigt werden kann, und mit wenigstens einem Ansatzbolzen (30), von denen jeder einen wenigstens teilweise zylindrischen Abschnitt (32) hat, der dazu angepasst ist, um von einem Aufnahmeabschnitt (3) der Standardsitzschiene (1) aufgenommen und darin befestigt zu werden, während ein oberer Abschnitt (34) des Ansatzbolzens dazu angepasst ist, um in Eingriff mit der Anpassungssitzschiene (10) zu kommen, um sie gegen Längsbewegungen in Bezug auf die Standardsitzschiene (1) zu verriegeln, **dadurch gekennzeichnet, dass** die Anpassungssitzschiene (10) aufweist:
Einen unteren Montagebereich (12), der dazu angepasst ist, in der Gleitschiene (2) der Standardsitzschiene (1) aufgenommen zu werden und der eine Mehrzahl von Vorsprüngen (14) aufweist, die entlang seiner Länge angeordnet sind und derartige Abmessungen haben, dass sie jeweils in eine entsprechende der kreisförmigen oberen Öffnungen (4) der Standardsitzschiene einsetzbar sind und dass sie, wenn sie unter einer der entsprechenden Lippenabschnitte (6) liegen, den Montageabschnitt in vertikaler Richtung in der Standardsitzschiene (1) verriegeln,
einen oberen Sekundärsitzschienenabschnitt (16), der eine hohle, in Längsrichtung verlaufende Sekundärsitzschiene (18) aufweist, die mit einer Reihe von äquidistanten Ausnehmungen (20; 28) zum Aufnehmen von an den Sitzbeinansätzen vorgesehenen Riegeln zum Verriegeln der Sitzbeinansätze gegen Bewegungen in Längsrichtung versehen sind, wobei der Abstand zwischen benachbarten Ausnehmungen (20; 28) in dem Sekundärsitzschienenabschnitt (16) kleiner als der Abstand zwischen benachbarten Aufnahmeabschnitten (3) der Standardsitzschiene (1) ist.

2. Flugzeugsitzschiene nach Anspruch 1, wobei die Ausnehmungen (20; 28) des oberen Sekundärsitzschienenabschnitts (16) durch kreisförmige Aufnahmeabschnitte (20) mit kreisförmigen oberen Öffnungen (21) gebildet sind, wobei die Aufnahmeabschnitte (20) sich mit dazwischen liegenden Lippenabschnitten (22) mit kleinerer Querausdehnung als die kreisförmigen Aufnahmeabschnitte abwechseln, um die Vorsprünge an den Ansätzen der Sitzbeine zurückzuhalten, wobei der Längsabstand (a) der Mittelpunkte der benachbarten kreisförmigen Aufnahmeabschnitte (20) kleiner ist als der oder gleich ist dem Durchmesser der kreisförmigen Aufnahmeabschnitte (3).

3. Flugzeugsitzschiene nach Anspruch 2, **dadurch gekennzeichnet, dass** der Längsabstand (a) der Mittelpunkte von benachbarten kreisförmigen Aufnahmeabschnitten (20) des oberen Sekundärsitzschienenabschnitts (16) im Bereich von 8 bis 12 mm liegt.

4. Flugzeugsitzschiene nach Anspruch 3, **dadurch gekennzeichnet, dass** der Längsabstand der Mittelpunkte von benachbarten kreisförmigen Aufnahmeabschnitten (20) des oberen Sekundärsitzschienenabschnitts (16) etwa 10 mm beträgt.

5. Flugzeugsitzschiene nach Anspruch 4, **dadurch gekennzeichnet, dass** der Durchmesser der kreisförmigen Aufnahmeabschnitte (20) des oberen Sekundärsitzschienenabschnitts (16) etwa 11 mm beträgt.

6. Flugzeugsitzschiene nach einem der vorhergehenden Ansprüche, **dadurch gekennzeichnet, dass** die Ausnehmungen des oberen Sekundärsitzschienenabschnitts (16) durch eine Reihe von äquidistanten Ausschnitten gebildet ist, die angrenzend an die Gleitschiene (8) zur Aufnahme von Vorsprüngen an den Flugzeugsitzansätzen gebildet sind.

7. Flugzeugsitzschiene nach einem der vorhergehenden Ansprüche, **dadurch gekennzeichnet, dass** die Anpassungssitzschiene (10) zwei längsverlaufende Gleitschienen aufweist, die parallel und auf Abstand zueinander angeordnet sind, wobei jede der Gleitschienen dazu angepasst ist, um einen von zwei Gleitkörpern aufzunehmen, die mit einem Flugzeugsitzansatz verbunden sind.

8. Flugzeugsitzschiene nach Ansprüchen 6 und 7, **dadurch gekennzeichnet, dass** eine Reihe von Ausschnitten (28) für jede der Gleitschienen (18) auf der Seite vorgesehen ist, die von der anderen Sitzschiene weg weist.

## Revendications

1. Glissière de siège d'avion pour la fixation amovible de garnitures de montants de sièges d'avion au sol de la cabine de l'avion qui est équipée d'une glissière de siège standard (1) qui comprend un corps de glissière allongé rectiligne ayant une coulisse longitudinale creuse (2) pourvue d'une série de sections de logement circulaires équidistantes (3) avec des ouvertures supérieures circulaires (4), lesquelles sections de logement circulaires alternent avec des sections de lèvres intermédiaires (6) de plus petites dimensions transversales que les sections de logement circulaires, la glissière de siège d'avion étant une glissière de siège adaptable (10), qui peut être arrêtée sur la glissière de siège standard, comprenant au moins un goujon (30), chacun ayant une portion au moins partiellement cylindrique (32) adaptée pour être logée par et bloquée dans une section de logement (3) de la glissière de siège standard (1), tandis qu'une portion supérieure (34) du goujon est adaptée pour être en prise avec la glissière de siège adaptable (10) pour la bloquer contre un mouvement longitudinal par rapport à la glissière de siège standard (1), **caractérisée par le fait que** la glissière de siège adaptable (10) comprend
une portion de montage inférieure (12) qui est adaptée pour être logée dans la coulisse (2) de la glissière de siège standard (1) et qui a une pluralité de pattes (14) positionnées le long de sa longueur et dimensionnées telles qu'elles peuvent être insérées dans respectivement l'une des ouvertures supérieures circulaires (4) de la glissière standard et telles que, lorsqu'elles sont positionnées sous des sections de lèvres respectives (6), elles bloquent la portion de montage dans le sens vertical dans la glissière de siège standard (1),
une portion de glissière secondaire supérieure (16) ayant une glissière longitudinale creuse secondaire (18) pourvue d'une série d'évidements équidistants (20 ; 28) pour recevoir des loquets prévus sur les garnitures de montant de siège pour bloquer les garnitures de montant de siège contre des mouvements dans le sens longitudinal, la distance entre des évidements adjacents (20 ; 28) dans la portion de glissière de siège secondaire (16) étant inférieure à la distance entre des sections de logement adjacentes (3) de la glissière de siège standard (1).

2. Glissière de siège d'avion selon la revendication 1, les évidements (20 ; 28) de la portion de glissière de siège secondaire supérieure (16) étant formés par des sections de logement circulaires (20) avec des ouvertures supérieures circulaires (21), lesdites sections de logement (20) alternant avec des sections de lèvres intermédiaires (22) de plus petites dimensions transversales que les sections de logement circulaires (20) pour retenir des pattes des garnitures des montants de siège, la distance longitudinale (a) des centres des sections de logement circulaires adjacentes (20) étant inférieure ou égale au diamètre des sections de logement circulaires (3).

3. Glissière de siège d'avion selon la revendication 2, **caractérisée en ce que** la distance longitudinale (a) des centres des sections de logement circulaires adjacentes (20) de la portion de glissière de siège supérieure (16) est de l'ordre de 8 à 12 mm.

4. Glissière de siège d'avion selon la revendication 3, **caractérisée en ce que** la distance longitudinale (a) des centres des sections de logement circulaires adjacentes (20) de la portion de glissière de siège supérieure (16) est d'environ 10 mm.

5. Glissière de siège d'avion selon la revendication 4, **caractérisée en ce que** le diamètre des sections de logement circulaires adjacentes (20) de la portion de glissière de siège supérieure (16) est d'environ 11 mm.

6. Glissière de siège d'avion selon l'une quelconque des revendications précédentes, **caractérisée en ce que** les évidements de la portion de glissière de siège secondaire supérieure (16) sont formés par une série de découpures équidistantes formées adjacentes à la glissière (8) pour recevoir des moulures des garnitures de siège d'avion.

7. Glissière de siège d'avion selon l'une quelconque des revendications précédentes, **caractérisée en ce que** la glissière adaptable de siège (10) comprend deux coulisses longitudinales arrangées parallèlement et espacées l'une par rapport à l'autre, chacune des glissières étant adaptée pour recevoir l'une de deux pièces coulissantes reliées à une garniture de glissière de siège.

8. Glissière de siège d'avion selon les revendications 6 et 7, **caractérisée en ce qu'**une série de découpures (28) est prévue pour chacune des glissières (18) sur le côté opposé à l'autre glissière de siège.
